(19) Europäisches Patentamt
European Patent Office
Office européen des brevets

(11) **EP 1 667 467 B1**

(12) **EUROPEAN PATENT SPECIFICATION**

(45) Date of publication and mention of the grant of the patent:
**09.04.2014 Bulletin 2014/15**

(51) Int Cl.:
**H04N 19/00** *(2014.01)*

(21) Application number: **05300955.1**

(22) Date of filing: **22.11.2005**

(54) **Method and apparatus for encoding or decoding two digital video signals multiplexed in a single-video signal path**

Verfahren und Vorrichtung zur Kodierung oder Dekodierung von zwei in einem Einzelvideosignalweg multiplexierten digitalen Videosignalen

Appareil et méthode pour le codage ou decodage de deux signaux vidéo numériques multiplexés dans un canal destiné à un unique signal vidéo

(84) Designated Contracting States:
**DE FR GB IT**

(30) Priority: **06.12.2004 EP 04292882**
**01.09.2005 EP 05090251**

(43) Date of publication of application:
**07.06.2006 Bulletin 2006/23**

(73) Proprietor: **GVBB Holdings S.A.R.L**
**2086 Luxembourg (LU)**

(72) Inventors:
• **Kuppens, Chris**
**4904 VK, Oosterhout (NL)**
• **Rotte, Jeroen**
**4835 GR, Breda (NL)**

• **van Rooy, Jan**
**5235 EM, S'Hertogenbosch (NL)**

(74) Representative: **Hill, Justin John et al**
**Olswang LLP**
**90 High Holborn**
**London**
**WC1V 6XX (GB)**

(56) References cited:
**EP-A- 0 740 469     EP-A- 0 848 517**
**EP-A- 0 926 898     DE-A1- 3 230 270**
**US-A- 5 157 656     US-A- 6 009 305**

• **PATENT ABSTRACTS OF JAPAN vol. 2000, no. 14, 5 March 2001 (2001-03-05) & JP 2000 333168 A (SONY CORP), 30 November 2000 (2000-11-30)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method and to an apparatus for encoding or decoding two digital video signals arranged in a single-video signal path, e.g. an SDI or HDSDI format video signal path.

Background

In the upper part of the market of professional video cameras a triax system is used for transferring various signals back and forth over a coaxial cable between the camera and a base unit. Transferring multiple signals in different direction over a single cable is feasible because frequency multiplexing is used in which to every type of signal a separate frequency band is assigned.

In the lower part of the market a multi-core adapter solution is currently being used.

In earlier systems all signals were transferred as analogue signals over separate wires or cables. Because no frequency multiplex/de-multiplex is required such solution is much cheaper. However, a disadvantage is that the maximum distance between camera and base unit is restricted to about 100 meters, that the signals on the receiving side need to be equalised and that every additional meter of cable has a negative influence on the signal quality, e.g. the S/N ratio.

In current systems the analogue camera CVBS video output signal (Chroma Video Blanking Signal) is replaced by a standard serial SDI signal (Serial Digital Interface) achieving a maximum data rate of e.g. 270Mbit/s, 143Mbit/s, 360Mbit/s or 540Mbit/s for SDTV and 1.485Gbit/s for HDTV over a coaxial cable. The SDI video signal has a word length of 10 bit and a multiplexed 4:2:2 format. Its clock rate is 27 MHz. It is standardised in ANSI/SMPTE 259M and ANSI/SMPTE 125M. At the receiving base unit this SDI signal is re-clocked and/or converted to CVBS format or $Y-C_r-C_b$ format. Thereby a degradation of the quality of the CVBS signal can be avoided. All the other signals in the multi-core cable remain in analog format.

Invention

A single SDI or HDSDI (High Definition Serial Digital Interface) connection is designed for carrying a single digital video signal. However, it is desirable to transmit a digital playback video signal as well as a digital teleprompter (TP) video signal from the base unit to a camera.

A problem to be solved by the invention is to provide transmission of two digital video signals, in particular a playback video signal and a teleprompter video signal from a base unit to a professional camera, via a serial video signal connection designed for transmission of a single video signal. This problem is solved by the encoding and decoding methods disclosed in claims 1 and 2. A corresponding apparatus is disclosed in claims 3 and 4, respectively.

A one-dimensional adaptive dynamic range compression (ADRC) is used to reduce the data word length of the two video signals to be transmitted via the SDI or HDSDI connection. To one of the two video signals (e.g. the teleprompter signal) a smaller data word length can be assigned than to the data word length of the other one (e.g. the playback signal), whereby the MSB bit (most significant bit) of the SDI connection is not used for carrying bits of the two compressed video signals. As an alternative, two compressed video signals having equal word length can be used whereby one video signal occupies the full range of 32 amplitude levels and the other video signal occupies a range of 31 amplitude levels.

Two compressed 8-bit multiplexed 4:2:2 signals are multiplexed into one 10-bit 4:2:2 stream. The ADRC compression is described e.g. in EP-A-0926898 and is a lossy compression which requires low resources only. The compression has a latency of less then 100 clock cycles and has a constant bit rate. The two compressed video streams fit transparently in a standard 270 Mbit/sec serial SDI video data stream.

All other or auxiliary data signals like synchronisation, data communication, private data, intercom and audio transport are also embedded in the SDI or HDSDI stream.

For compatibility with analogue recording equipment some analogue signals are also present on the adapter VTR plug that is the standard digital multi-core connector.

Only one SDI/HDSDI downstream and one SDI/HDSDI upstream form the link between camera and base unit. The upstream SDI signal contains two video signals, e.g. teleprompter video and playback video. These video signals are send back to the camera. Playback video, also known as external video, can be used by the cameraman for orientation purposes. Teleprompter video is used by news readers for displaying text on a monitor or any other display.

The advantages of the one-dimensional ADRC compression are:

- low latency of less then 100 clock cycles;
- it uses very little resources, i.e. it is a low-cost compression;
- practically or subjectively it has no loss of horizontal and vertical resolution;
- it has a constant bit rate.

A disadvantage is that there is some loss of amplitude resolution.

In principle, the inventive method is suited for encoding a first and a second digital video signal using compression, the samples of each of which have a pre-selected original word length, into a combined video signal the code words of which have a pre-selected main word length that is smaller than two times said original word length, said method including the steps:

- from lines of said first and second video signals, successively forming sample blocks for a luminance component and for two different chrominance components of each one of said first and second video signals;
- determining the minimum and the maximum amplitude values in a current sample block;
- in said current sample block, subtracting said minimum amplitude value from every sample in said current sample block and quantising the resulting difference values such that the word length of the quantised difference values gets a pre-selected first word length for the quantised difference values of said first video signal and gets a pre-selected second word length for the quantised difference values of said second video signal, wherein said first and second word lengths can be different, and whereby said quantising is controlled by the dynamic range value in said current sample block, said dynamic range value representing the difference between said maximum amplitude value and said minimum amplitude value in said current sample block;
- assembling, for a current data block of said combined video signal, each quantised difference value of said first and second video signals such that the bits of a quantised difference value of said first video signal form lower bit positions of a data word of said combined video signal and the bits of a corresponding quantised difference value of said second video signal form upper bit positions of a data word of said combined video signal, said upper bit positions being arranged adjacent to said lower bit positions, whereby the bits of the data words for said minimum amplitude value and said dynamic range value of said current data block, or for said minimum amplitude value and said maximum amplitude value of said current data block, each form one bit per data word of said quantised difference values of said first and second video signals;
- successively outputting data words assembled in such way as said combined video signal.

In principle, the inventive method is suited for decoding a combined video signal including two compressed video signals into a first and a second digital video signal, the samples of each of which have a pre-selected original word length, whereby the code words of said combined video signal have a pre-selected main word length that is smaller than two times said original word length, said method including the steps:

- parsing code words of said combined video signal, so as to regain from pre-selected lower bit positions - representing a first word length of each one of said code words - the bits of quantised difference values of said first video signal and from pre-selected upper bit positions - representing a second word length of corresponding ones of said code words - the bits of corresponding quantised difference values of said second video signal, said upper bit positions being arranged adjacent to said lower bit positions, wherein said first and second word lengths can be different, and to regain data words for a minimum amplitude value and a dynamic range value, or for a minimum amplitude value and a maximum amplitude value, of a current data block of said first and of said second digital video signal, whereby the bits of the data words for said minimum amplitude value and said dynamic range value or said maximum amplitude value, respectively, of said current data block each form one bit per code word of said quantised difference values of said first and second video signals, and whereby said dynamic range value represents the difference between said maximum amplitude value and said minimum amplitude value in said current data block;
- in said current data block, inversely quantising said quantised difference values under control of said dynamic range value and adding said minimum amplitude value to each one of said inversely quantised difference values, whereby the word length of the correspondingly combined values gets said pre-selected original word length for said first video signal and said second video signal;
- from successive data blocks, forming and outputting sample words for lines of a luminance component and two different chrominance components of each one of said first and second video signals.

In principle the inventive apparatus is suited for encoding a first and a second digital video signal using compression, the samples of each of which have a pre-selected original word length, into a combined video signal the code words of which have a pre-selected main word length that is smaller than two times said original word length, said apparatus including:

- means being adapted for forming successively, from lines of said first and second video signals, sample blocks for a luminance component and for two different chrominance components of each one of said first and second video signals;

- means being adapted for determining the minimum and the maximum amplitude values in a current sample block;
- means being adapted for subtracting, in said current sample block, said minimum amplitude value from every sample in said current sample block;
- means being adapted for quantising the resulting difference values such that the word length of the quantised difference values gets a pre-selected first word length for the quantised difference values of said first video signal and gets a pre-selected second word length for the quantised difference values of said second video signal, wherein said first and second word lengths can be different, and whereby said quantising is controlled by the dynamic range value in said current sample block, said dynamic range value representing the difference between said maximum amplitude value and said minimum amplitude value in said current sample block;
- means being adapted for assembling, for a current data block of said combined video signal, each quantised difference value of said first and second video signals such that the bits of a quantised difference value of said first video signal form lower bit positions of a data word of said combined video signal and the bits of a corresponding quantised difference value of said second video signal form upper bit positions of a data word of said combined video signal, said upper bit positions being arranged adjacent to said lower bit positions, whereby the bits of the data words for said minimum amplitude value and said dynamic range value of said current data block, or for said minimum amplitude value and said maximum amplitude value of said current data block, each form one bit per data word of said quantised difference values of said first and second video signals;

and for successively outputting data words assembled in such way as said combined video signal.

In principle the inventive apparatus is suited for decoding a combined video signal including two compressed video signals into a first and a second digital video signal, the samples of each of which have a pre-selected original word length, whereby the code words of said combined video signal have a pre-selected main word length that is smaller than two times said original word length, said apparatus including:

- means being adapted for parsing code words of said combined video signal, so as to regain from pre-selected lower bit positions - representing a first word length of each one of said code words - the bits of quantised difference values of said first video signal and from pre-selected upper bit positions - representing a second word length of corresponding ones of said code words - the bits of corresponding quantised difference values of said second video signal, said upper bit positions being arranged adjacent to said lower bit positions, wherein said first and second word lengths can be different, and to regain data words for a minimum amplitude value and a dynamic range value, or for a minimum amplitude value and a maximum amplitude value, of a current data block of said first and of said second digital video signal, whereby the bits of the data words for said minimum amplitude value and said dynamic range value or said maximum amplitude value, respectively, of said current data block each form one bit per code word of said quantised difference values of said first and second video signals, and whereby said dynamic range value represents the difference between said maximum amplitude value and said minimum amplitude value in said current data block;
- means being adapted for inversely quantising, in said current data block, said quantised difference values under control of said dynamic range value and adding said minimum amplitude value to each one of said inversely quantised difference values, whereby the word length of the correspondingly combined values gets said pre-selected original word length for said first video signal and said second video signal;
- means being adapted for forming and outputting, from successive data blocks, sample words for lines of a luminance component and two different chrominance components of each one of said first and second video signals.

Advantageous additional embodiments of the invention are disclosed in the respective dependent claims.

<u>Drawings</u>

Exemplary embodiments of the invention are described with reference to the accompanying drawings, which show in:

Fig. 1    a camera /base unit system including one SDI downlink and one SDI uplink connection;
Fig. 2    encoder according to the invention;
Fig. 3    decoder according to the invention;
Fig. 4    block diagram of an encoder according to the invention;
Fig. 5    block diagram of a decoder according to the invention;
Fig. 6    2-D representation of one complete picture;
Fig. 7    sections of a complete line;
Fig. 8    components of a line;

Fig. 9     an orientation of two 5-bit compressed-stream data words within data words of a 10-bit stream;
Fig. 10    Y group of values of a data block;
Fig. 11    C group of values of a data block;
Fig. 12    second inventive bit arrangement in an SDI data word;
Fig. 13    initial steps in a compression program suitable for carrying out the invention;
Fig. 14    compression steps in a program suitable for carrying out the invention;
Fig. 15    decompression steps of a program suitable for carrying out the invention;
Fig. 16    example luminance signal in an 8-samples group;
Fig. 17    example luminance signal in an 8-samples group with related quantisation thresholds;
Fig. 18    basic ADRC group border arrangement;
Fig. 19    improved ADRC group border arrangement.

Exemplary embodiments

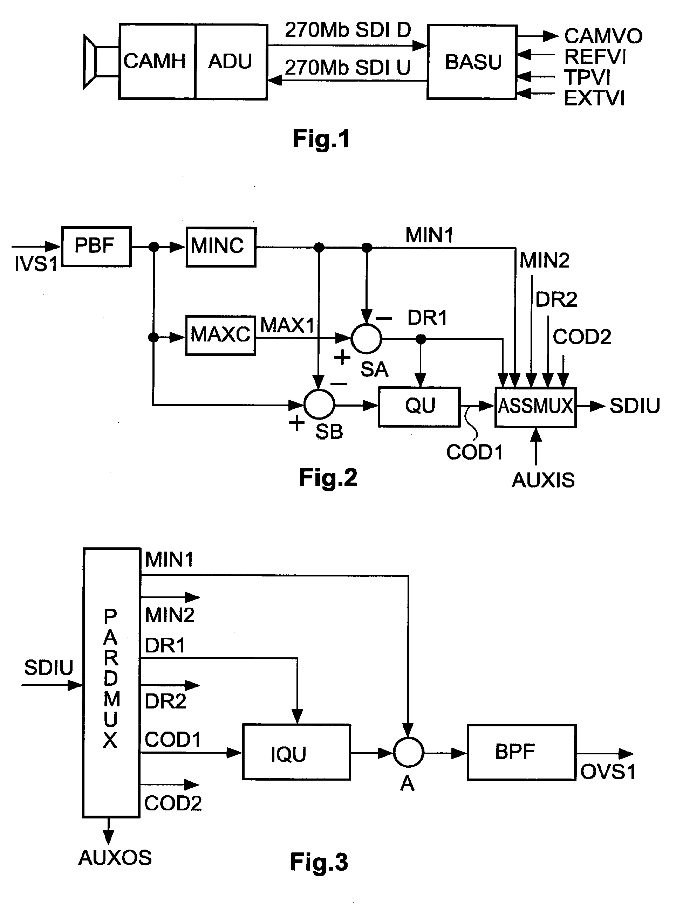

In Fig. 1 an adapter unit ADU is attached to a camera head CAMH. A base unit BASU receives a reference video input signal REFVI, a teleprompter video input signal TPVI and has an Extern video in terminal EXTVI for entering auxiliary signals. BASU outputs a camera video output signal CAMVO. The base unit sends to the adapter unit the above-described SDI/HDSDI upstream data stream SDIU carrying TP and Playback, and receives from the adapter unit an SDI/HDSDI downstream SDID carrying the camera video signal.

In Fig. 2 the encoder receives a digital video input signal IVS1. In the PAL, SECAM and NTSC TV systems the active video portion of one video line has 720 pixels with 1440 components. These components are arranged in a multiplexed fashion: $C_b$-Y-$C_r$-Y-$C_b$-Y-$C_r$-Y- etc., wherein Y represents an e.g. 10-bit luminance sample, $C_b$ represents an e.g. 10-bit blue-component chrominance sample and $C_r$ represents a corresponding red-component chrominance sample. The possible amplitude values for every sample occupy a slightly limited range only within the 10-bit span in order to avoid interference with a Timing Reference Signal TRS.

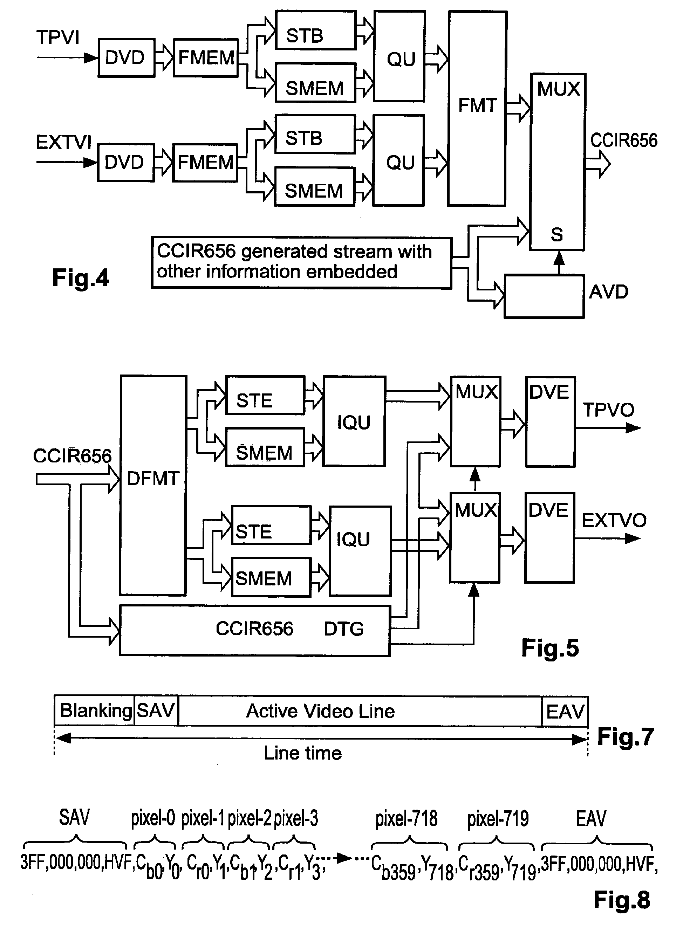

A corresponding video line is depicted in Fig. 7 and consists of the active video portion, a horizontal blanking section that can be used for embedding additional data and/or audio data, and a Start Active Video word SAV as well as an End Active Video word EAV. The inventive compression/decompression code replaces only the 1440 words of the active video line section.

The line arrangement is depicted in more detail in Fig. 8. The SAV and EAV sections each consist of four data word sections, each including the HVF word which is a part of the Timing Reference Signal TRS and which signals the start and stop of horizontal, vertical and frame pulses H, V and F, respectively. Some parity bits are also located in this HVF timing word allowing to check and correct HVF if necessary. The H-, V- and F-pulses represent the total timing of the picture.

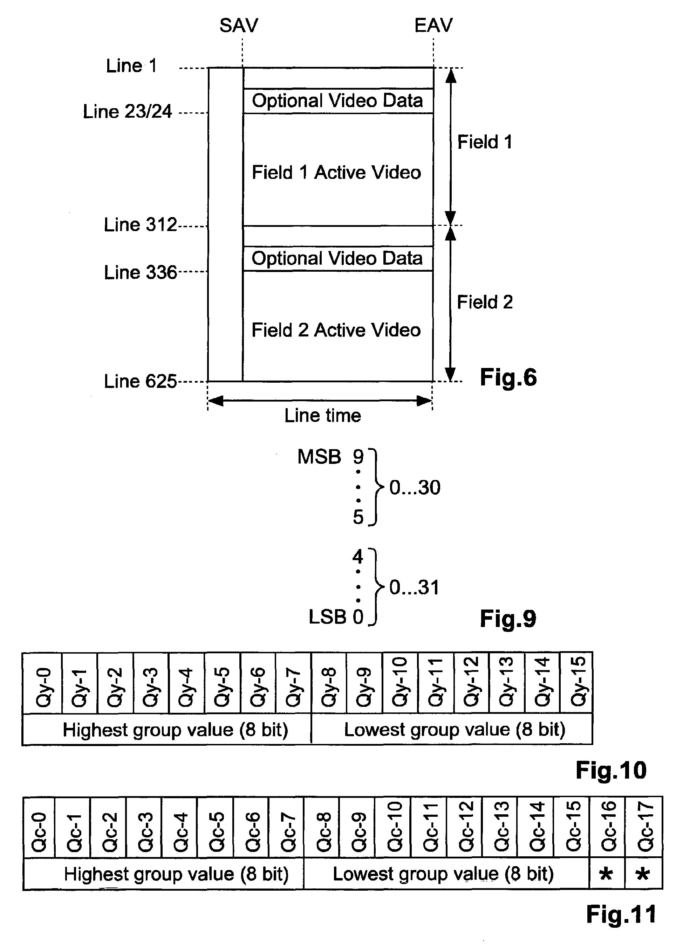

How the lines are arranged as a PAL or SECAM picture frame is shown in Fig. 6. Blanking, SAV and EAV is present in every line. Field 1 and field 2 each contain in total 312.5 lines. The active portion of field 1 starts with half line 23 or full line 24 and ends with full line 310. The active portion of field 2 starts with full line 336 and ends with full line 622 or half line 623.
For NTSC, field 1 and field 2 each contain in total 262.5 lines. The active portion of field 1 starts with full line 21 and ends with full line 262 or half line 263. The active portion of field 2 starts with half line 283 or full line 284 and ends with full line 525.
E.g. 19 lines before the start of the active fields 1 and 2 may contain optional video data.

One video line includes 720 Y, 360 $C_b$ and 360 $C_r$ samples. These components are compressed separately. Returning to Fig. 2, for each component groups or blocks including e.g. 16 successive samples are formed in a pixel-to-block formatter PBF, like Y0-Y1-Y2-Y3-Y4-...-Y15. From each current group the highest amplitude value MAX1 and the lowest amplitude value MIN1 is determined in a maximum calculator MAXC and a minimum calculator MINC, respectively. In a first subtractor SA the MIN1 value is subtracted from the MAX1 value thereby resulting in a dynamic range value DR1 for the current group. In a second subtractor SB the MIN1 value is subtracted from each one of the original sample amplitude values of the current group, which processing step can be considered as representing a normalisation. The difference signal output values of subtractor SB are fed to a quantiser QU in which they are quantised under control of the current dynamic range value DR1 such that the quantiser output signal values COD1 occupy a pre-selected fixed amplitude range only, which amplitude range (e.g. 3, 4 or 5 bit) is smaller than that occupied by the original sample amplitude values (e.g. 8 or 10 bit).

The encoder contains a second part (not depicted) which basically corresponds to the first part described above. The first part processes e.g. the playback video signal IVS1 whereas the second part processes the teleprompter video signal IVS2. The second part generates corresponding output signals MIN2, DR2 and COD2. As an alternative, the input signals IVS1 and IVS2 are both processed in a single part in a multiplexed fashion.
The sample playback video signal amplitude differences output from SB are quantised to 4 bits in a 10-bit system, and for the TP signal to 4 bits (or 3 bits) in a 10-bit system. Because the minimum value MIN and the dynamic range value DR or the maximum value MAX for each group or block are required by the decoder, these values are also transmitted. A different bit from the two current 8-bit data words for MIN and DR, or for MIN and MAX, is assigned to the different compressed data words of the current group or block, i.e. the bits of these two values form a fifth bit of the playback video signal data words and a fifth (or fourth) bit of the TP signal data words. Preferably, these additional bits are arranged at the beginning or at the end of the compressed playback signal data words and the compressed TP signal data words. The signals MIN1, DR1, COD1, MIN2, DR2 and COD2, as well as any required or desired auxiliary input signals AUXIS are fed to an assembling and multiplexing stage ASSMUX which outputs a corresponding SDI data stream SDIU.

In a corresponding decoder as shown in Fig. 3 signal SDIU enters a parser and demultiplexer stage PARDMUX which provides signals MIN1, DR1, COD1, MIN2, DR2 and COD2, as well as corresponding auxiliary output signals AUXOS. In a first part of the decoder signal COD1 is correspondingly inversely quantised in an inverse quantiser IQU under control of signal DR1. The output signal values of IQU are added in an adder A to the minimum values MIN1. The resulting reconstructed output signal samples can be fed to a block-to-pixel formatter BPF which outputs the output video signal OVS1, i.e. the pixel values of a line of the playback video signal. The corresponding second part (not depicted) of the decoder generates from the signals MIN2, DR2 and COD2 pixel values OVS2 of a line of the teleprompter video signal. Preferably, if a total or combined binary code word (i.e. TPS combined with PBS) in the combined video signal SDIU has a value that would lie in a forbidden range then e.g. the value '512' is added in assembling and multiplexing stage ASSMUX and the corresponding value '512' is subtracted in parser and demultiplexer stage PARDMUX.

As shown in a compression schematic overview in Fig. 4, an analog video input signal TPVI is applied to a digital video decoder DVD that generates a complete 8-bit CCIR656 (SMPTE 259) compliant digital video stream. Both field memories FMEM are needed for compensation in timing from the asynchronous input signal and for encoding. This timing is configured such that both 10-bit streams at the inputs of the multiplexer MUX are synchronous. The statistics builder STB corresponds to MINC, MAXC, SA and SB in Fig. 2. The samples memory SMEM corresponds to PBF in Fig. 2. The formatter FMT is included in block ASSMUX in Fig. 2. The select input of MUX is switched such that, using an active video detector AVD, only the active portion of the video line is replaced with the two compressed streams leaving other embedded data and information in the stream intact.

As shown in a decompression schematic overview in Fig. 5, the received CCIR656 digital video stream can be directly connected to the deformatter DFMT. The statistics extractor STE and the sample memory SMEM are included in block PARDMUX in Fig. 3. The multiplier or inverse quantiser IQU in Fig. 5 corresponds to IQU in Fig. 3. At the deformatter's outputs two 5-bit streams are available for decompression. To input the correct format for the multiplexers MUX and the digital video encoders DVE, the timing is reconstructed using a delayed timing generator DTG.

Following compression and merging of the two streams in ASSMUX or FMT care must be taken that the resulting data words do not corrupt synchronisation. In other words e.g. the values '0', '1', '1022' and '1023' must not occur.

In case a 5-bit and a 4-bit stream are merged one bit, e.g. the MSB, could be reserved for corruption prevention. If the constructed code words tend to get a value in the forbidden zone '0' and '1', '512' is added by e.g. setting the MSB to '1'.

However, thereby one half of the total range of 1024 values is consumed by corruption prevention. A more effective way of preventing timing corruption is to construct two 5-bit streams of which one occupies a full range of 32 values and the other one occupies only 31 values. The advantage is that only 32 values out of 1024 values are not used for video coding.

This is depicted in Fig. 9 in which in the five lower bits 32 values and in the five upper bits 31 values are used. The total range used here is 0 ... $991_{decimal}$ 10-bit, but forbidden words '0' and '1' could occur.

If in the original compression processing values between '0' and '15' occur, '32' must be subtracted. Thereby the forbidden range '0' to '15' is shifted to the range 992 ... 1007. Note that subtracting '32' is equivalent to adding 992 (=1024-32) since the sum will always be 10 bit with no parity.

Correspondingly, in the decompression processing it is checked whether there occur values in the range 992 ... 1007. If that is true '32' will be added.

Fig. 8 gives a short overview of the sequence of the stored components per line in the 10-bit stream around SAV and EAV.

For details see the above-mentioned SMPTE/ITU standards.

For each line the active video portion of the stream is now multiplexed into three separate streams:

Multiplexed stream 1
Cb0, Cb1, Cb2, Cb3, ..., Cb357, Cb358, Cb359
Multiplexed stream 2
Cr0, Cr1, Cr2, Cr3, ..., Cr357, Cr358, Cr359
Multiplexed stream 3
Y0, Y1, Y2, Y3, ..., Y717, Y718, Y719
Per line, every multiplexed stream is partitioned into sample groups. Y is partitioned into 45 groups of 16 samples each, 45*16 = 720. Cb and Cr are both divided as 20 groups of 18 samples each, 20*18 = 360. These components add up to 720 + 2*360 = 1440 samples per line. The groups or blocks generated are:

(Cb0 ... Cb17), (Cb18 ... Cb35), (Cb36 ... Cb53), etc.;
(Cr0 ... Cr17), (Cr18 ... Cr35), (Cr36 ... Cr53), etc.;
(Y0 ... Y15), (Y16 ... Y31), (Y32 ... Y47), (Y48 ... Y63),
etc.

All samples from any group are always treated as positive numbers only. From every group the highest and lowest values $G_{highest}$, $G_{lowest}$ are determined, both are 8-bit. The highest minus the lowest value is the group range $G_{range} = G_{highest} - G_{lowest}$.
All the samples of the group are scaled to this group range and are quantised to the available levels. Available quantisation levels for external-video is '15' and for teleprompter-video '14':

$$Q_{sample(i)} = (G_{sample(i)} - G_{lowest}) * (Q_{levels} - 1) / G_{range}.$$

Fig. 10 shows how a corresponding Y group block looks like following quantisation.
Fig. 11 shows how a corresponding C group block looks like following quantisation.
Y and C (i.e. Cb and Cr) are quantised using the same resolution for that channel. Each 5-bit channel is build as one bit for constructing the highest/lowest group values (or the lowest group value and the dynamic range value) and four bits for quantised values. Two bits in every C-group block can be left unused, or can be used as an additional data channel. Because the groups have different lengths the colour information for an Y group is taken from either one C group or from two adjacent C groups.
Advantageously, the reconstructed stream is arranged as a components multiplex the same way as defined in the above-mentioned SMPTE standard. The highest and lowest group values are sent bit-wise together with the quantised samples of that group. The arrangement of the highest and lowest group values in the reconstructed stream is like depicted in figures 10 and 11. The MSB can be sent/received first. Preferably, the LSB or the MSB within the 5-bit playback signal data words and the LSB or the MSB within the 5-bit TP signal data words represent the values MIN1/MIN2 (lowest group value) and DR1/DR2 (dynamic range value) or MAX1/MAX2 (highest group value).
The encoding formula for external-video is:

$$Q_{sample(i)} = \text{Truncate}[((G_{sample(i)} - G_{lowest}) * 15) / G_{range} + 0.5]$$

The encoding formula for teleprompter-video is:

$$Q_{sample(i)} = \text{Truncate}[((G_{sample(i)} - G_{lowest}) * 14) / G_{range} + 0.5]$$

wherein $G_{range}$, $G_{lowest}$ and $G_{sample(i)}$ have values lying between '0' and '255'. $G_{sample(i)}$ is the sample taken from the original stream.
The decoding formula for external-video is:

$$Sample_{(i)\_reconstructed}$$
$$= ((G_{highest} - G_{lowest}) * Q_{(i)sample}) / 15 + G_{lowest}$$

The decoding formula for teleprompter-video is:

$$\text{Sample}_{(i)\_\text{reconstructed}}$$
$$= ((G_{\text{highest}} - G_{\text{lowest}}) * Q_{(i)\text{sample}})/14 + G_{\text{lowest}}$$

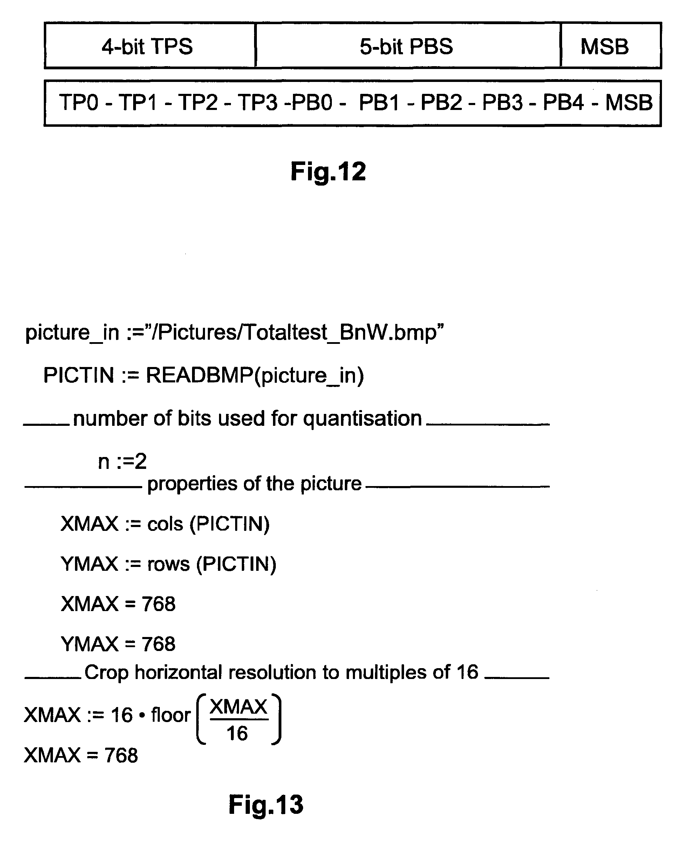

As an alternative embodiment shown in Fig. 12, a 10-bit SDI stream data word can contain one 5-bit data word of the playback video signal PBS as well as one 4-bit data word of the teleprompter video signal TP. Thereby in the 10-bit SDI signal words one bit can remain unused, e.g. the MSB bit (most significant bit). That bit can be used to comply to the above-mentioned standards and to avoid TRS corruption. If a total or combined binary code word (i.e. TPS combined with PBS) in the combined video signal would get a value that is below '64' then the value '512' is added in assembling and multiplexing stage ASSMUX.

Preferably, bit PB0 or bit PB4 of the playback signal data words and bit TP0 or bit TP3 of the TP signal data words represent the values MIN1/MIN2 and DR1/DR2 or MAX1/MAX2.

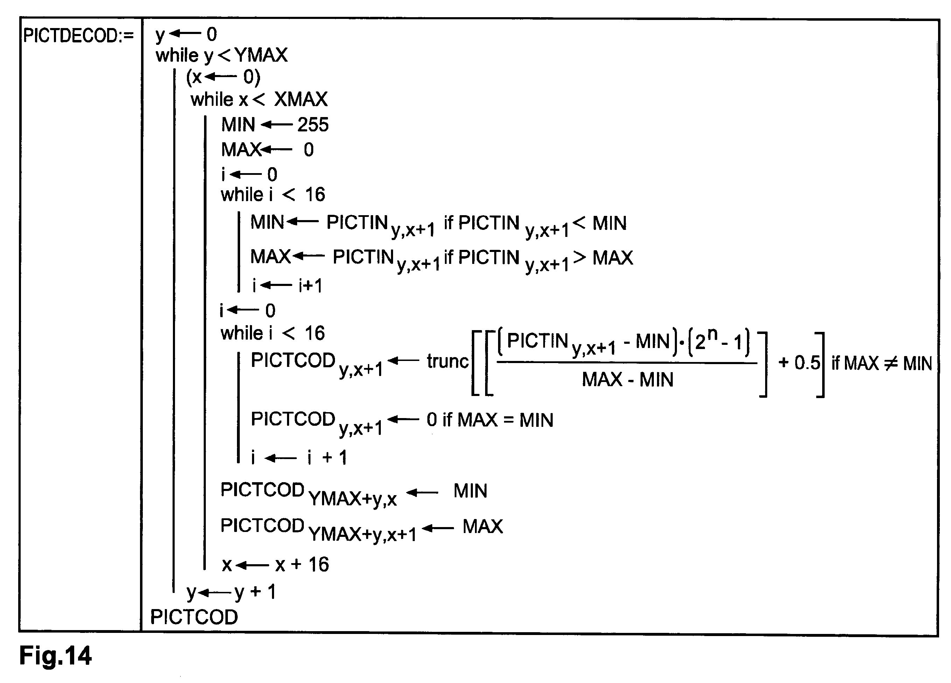

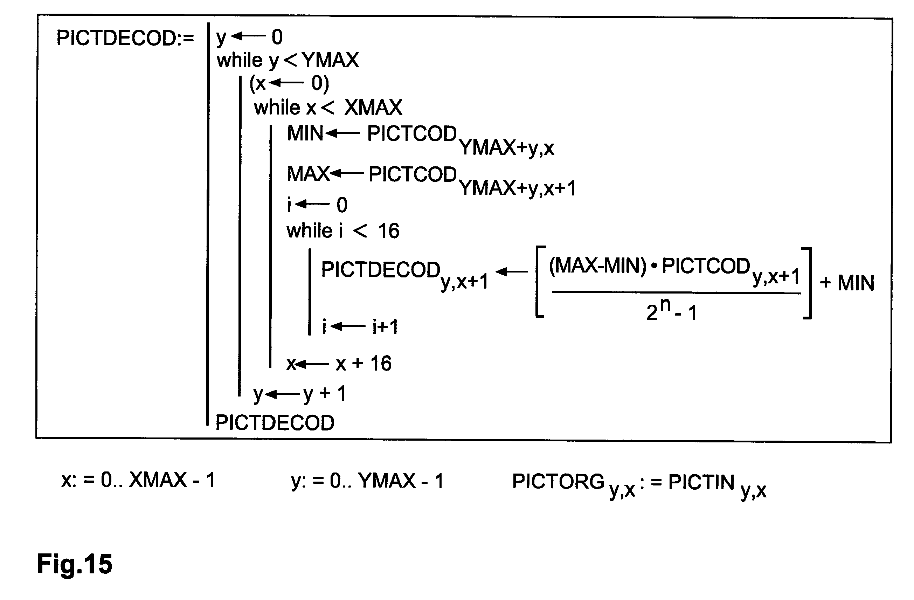

In Fig. 13 the initial steps in a compression program suitable for carrying out the invention are shown. In Fig. 14 the compression steps in a program suitable for carrying out the invention are shown. In Fig. 15 the decompression steps of a program suitable for carrying out the invention are shown.

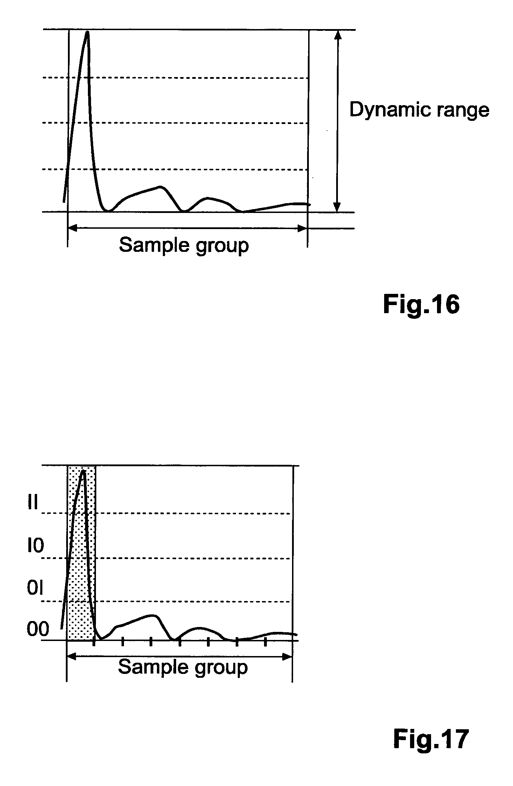

The dynamic performance of the inventive ADRC processing can be improved by shifting lowest group values. This is explained in connection with figures 16 to 19. ADRC makes use of the property that in a small group of consecutive pixel values their amplitudes do not differ much from each other. Usually this is the case. Another approach is that in a small group of pixel values the dynamic amplitude range is small, the highest group sample value is close to the lowest group sample value.

However, if e.g. one sample in such group has a very low or high amplitude value in comparison with the other group samples, a visible column forming effect can occur. Fig. 16 and Fig. 17 show an example video signal in an 8-samples group using 2-bit quantisation, i.e. quantisation levels '00', '01', '10' and '11'. Because of the first much higher sample amplitude value the other samples are quantised to the lowest quantisation level, i.e. they are set to the minimum value of this group. Thereby in the decoded signal, following quantisation and inverse quantisation, a column pattern would become visible.

The easiest way to deal with this situation would be to decrease the number of samples per group. But this would also increase the amount of data, i.e. the resulting data rate. An advantageous way to decrease column forming is to shift the lowest group values by half the group size.

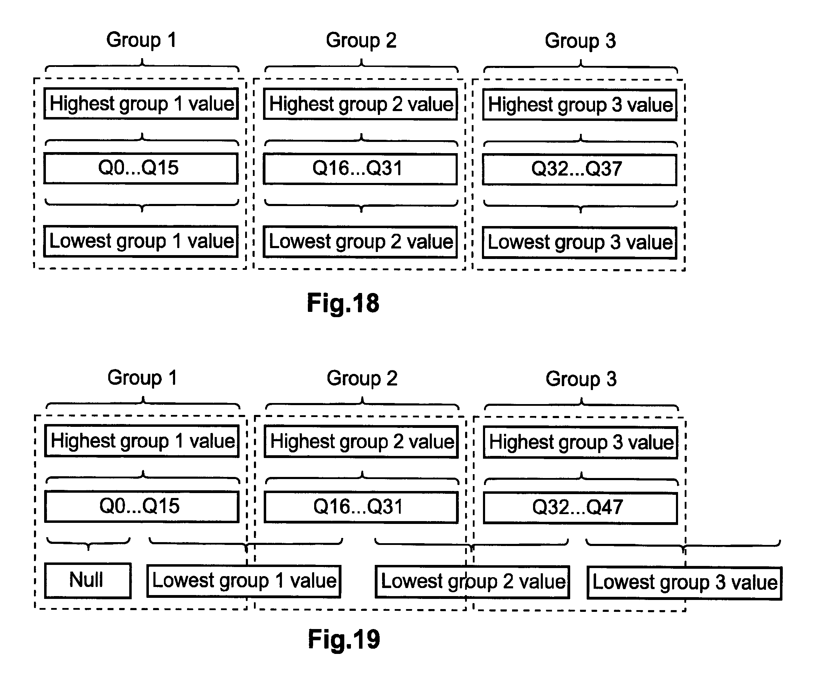

For explaining this, the normal ADRC application is depicted first in Fig. 18. For instance, every group has 16 samples. Consider group 2. The highest and lowest sample values of group 2 are arranged in connection with, or are assigned to, samples S16 ... S31 (or quantised sample values Q16 ... Q31) as 'highest group2 value' and 'lowest group2 value'. At the decompression side, Q16 ... Q31 are reconstructed with the aid of 'highest group2 value' and 'lowest group2 value'.

As shown in Fig. 19, the lowest group values can be shifted. In this example the lowest group value for samples S0 ... S7 is considered to be 'null'. The lowest group1 value is arranged over the samples Q8 ... Q23, the lowest group2 value over the samples Q24 ... Q39, and the lowest group3 value over the samples Q40 ... Q55.

Again, consider the samples of group 2, S16 ... S31. The samples S16 ... S23 are quantised using the highest group2 value and the lowest group1 value, whereas the samples S24 ... S31 are quantised using highest group2 value and lowest group2 value.

At the decoder the same highest and lowest group values are used as at the encoder.

Advantageously, due to using shifted lowest group values the above-described column artefact effect can be reduced significantly.

The numbers given in this description, e.g. the word lengths, can be adapted to different applications of the invention as required.

**Claims**

1. Method for encoding a first (IVS1) and a second (IVS2) digital video signal using compression, the samples of each of which have a pre-selected original word length, into a combined video signal (SDIU) the code words of which have a pre-selected main word length that is smaller than two times said original word length, said method including the steps:

   - from lines of said first and second video signals, successively forming (PBF) sample blocks for a luminance component (Y) and for two different chrominance components ($C_r$, $C_b$) of each one of said first and second video signals (IVS1, IVS2);

- determining (MAXC, MINC) the minimum (MIN1, MIN2) and the maximum (MAX1, MAX2) amplitude values in a current sample block;

- in said current sample block, subtracting (SB) said minimum amplitude value from every sample in said current sample block and quantising (QU) the resulting difference values such that the word length of the quantised difference values (COD1, COD2) gets a pre-selected first word length for the quantised difference values of said first video signal and gets a pre-selected second word length for the quantised difference values of said second video signal, wherein said first and second word lengths can be different, and whereby said quantising is controlled by the dynamic range value (DR1, DR2) in said current sample block, said dynamic range value representing the difference (SA) between said maximum amplitude value and said minimum amplitude value in said current sample block;

- assembling (ASSMUX), for a current data block of said combined video signal (SDIU), each quantised difference value of said first and second video signals such that the bits of a quantised difference value of said first video signal form lower bit positions (TP0 - TP3) of a data word of said combined video signal and the bits of a corresponding quantised difference value of said second video signal form upper bit positions (PB0 - PB4) of a data word of said combined video signal, said upper bit positions being arranged adjacent to said lower bit positions, whereby the bits of the data words for said minimum amplitude value (MIN1, MIN2) and said dynamic range value (DR1, DR2) of said current data block, or for said minimum amplitude value (MIN1, MIN2) and said maximum amplitude value (MAX1, MAX2) of said current data block, each form one bit per data word of said quantised difference values of said first and second video signals;

- successively outputting data words assembled in such way as said combined video signal (SDIU).

2. Method for decoding a combined video signal (SDIU) including two compressed video signals into a first (IVS1) and a second (IVS2) digital video signal, the samples of each of which have a pre-selected original word length, whereby the code words of said combined video signal have a pre-selected main word length that is smaller than two times said original word length, said method including the steps:

- parsing (PARDMUX) code words of said combined video signal (SDIU), so as to regain from pre-selected lower bit positions (TP0 - TP3) - representing a first word length of each one of said code words - the bits of quantised difference values (COD1) of said first video signal and from pre-selected upper bit positions (PB0 - PB4) - representing a second word length of corresponding ones of said code words - the bits of corresponding quantised difference values (COD2) of said second video signal, said upper bit positions being arranged adjacent to said lower bit positions, wherein said first and second word lengths can be different, and to regain data words for a minimum amplitude value (MIN1, MIN2) and a dynamic range value (DR1, DR2), or for a minimum amplitude value (MIN1, MIN2) and a maximum amplitude value (MAX1, MAX2), of a current data block of said first and of said second digital video signal, whereby the bits of the data words for said minimum amplitude value (MIN1, MIN2) and said dynamic range value (DR1, DR2) or said maximum amplitude value (MAX1, MAX2), respectively, of said current data block each form one bit per code word of said quantised difference values of said first and second video signals, and whereby said dynamic range value represents the difference between said maximum amplitude value and said minimum amplitude value in said current data block;

- in said current data block, inversely quantising (IQU) said quantised difference values (COD1, COD2) under control of said dynamic range value and adding (A) said minimum amplitude value to each one of said inversely quantised difference values, whereby the word length of the correspondingly combined values gets said pre-selected original word length for said first video signal and said second video signal;

- from successive data blocks, forming (BPF) and outputting (OVS1) sample words for lines of a luminance component (Y) and two different chrominance components ($C_r$, $C_b$) of each one of said first and second video signals (IVS1, IVS2).

3. Apparatus for encoding a first (IVS1) and a second (IVS2) digital video signal using compression, the samples of each of which have a pre-selected original word length, into a combined video signal (SDIU) the code words of which have a pre-selected main word length that is smaller than two times said original word length, said apparatus including:

- means (PBF) being adapted for forming successively, from lines of said first and second video signals, sample blocks for a luminance component (Y) and for two different chrominance components ($C_r$, $C_b$) of each one of said first and second video signals (IVS1, IVS2);

- means (MAXC, MINC) being adapted for determining the minimum (MIN1, MIN2) and the maximum (MAX1, MAX2) amplitude values in a current sample block;

- means (SB) being adapted for subtracting, in said current sample block, said minimum amplitude value from every sample in said current sample block;
- means (QU) being adapted for quantising the resulting difference values such that the word length of the quantised difference values (COD1, COD2) gets a pre-selected first word length for the quantised difference values of said first video signal and gets a pre-selected second word length for the quantised difference values of said second video signal, wherein said first and second word lengths can be different, and whereby said quantising is controlled by the dynamic range value (DR1, DR2) in said current sample block, said dynamic range value representing the difference (SA) between said maximum amplitude value and said minimum amplitude value in said current sample block;
- means (ASSMUX) being adapted for assembling, for a current data block of said combined video signal (SDIU), each quantised difference value of said first and second video signals such that the bits of a quantised difference value of said first video signal form lower bit positions (TP0 - TP3) of a data word of said combined video signal and the bits of a corresponding quantised difference value of said second video signal form upper bit positions (PB0 - PB4) of a data word of said combined video signal, said upper bit positions being arranged adjacent to said lower bit positions, whereby the bits of the data words for said minimum amplitude value (MIN1, MIN2) and said dynamic range value (DR1, DR2) of said current data block, or for said minimum amplitude value (MIN1, MIN2) and said maximum amplitude value (MAX1, MAX2) of said current data block, each form one bit per data word of said quantised difference values of said first and second video signals;

and for successively outputting data words assembled in such way as said combined video signal (SDIU).

4. Apparatus for decoding a combined video signal (SDIU) including two compressed video signals into a first (IVS1) and a second (IVS2) digital video signal, the samples of each of which have a pre-selected original word length, whereby the code words of said combined video signal have a pre-selected main word length that is smaller than two times said original word length, said apparatus including:

- means (PARDMUX) being adapted for parsing code words of said combined video signal (SDIU), so as to regain from pre-selected lower bit positions (TP0 - TP3) - representing a first word length of each one of said code words - the bits of quantised difference values (COD1) of said first video signal and from pre-selected upper bit positions (PB0 - PB4) - representing a second word length of corresponding ones of said code words - the bits of corresponding quantised difference values (COD2) of said second video signal, said upper bit positions being arranged adjacent to said lower bit positions, wherein said first and second word lengths can be different, and to regain data words for a minimum amplitude value (MIN1, MIN2) and a dynamic range value (DR1, DR2), or for a minimum amplitude value (MIN1, MIN2) and a maximum amplitude value (MAX1, MAX2), of a current data block of said first and of said second digital video signal, whereby the bits of the data words for said minimum amplitude value (MIN1, MIN2) and said dynamic range value (DR1, DR2) or said maximum amplitude value (MAX1, MAX2), respectively, of said current data block each form one bit per code word of said quantised difference values of said first and second video signals, and whereby said dynamic range value represents the difference between said maximum amplitude value and said minimum amplitude value in said current data block;
- means (IQU) being adapted for inversely quantising, in said current data block, said quantised difference values (COD1, COD2) under control of said dynamic range value and adding (A) said minimum amplitude value to each one of said inversely quantised difference values, whereby the word length of the correspondingly combined values gets said pre-selected original word length for said first video signal and said second video signal;
- means (BPF) being adapted for forming and outputting (OVS1), from successive data blocks, sample words for lines of a luminance component (Y) and two different chrominance components ($C_r$, $C_b$) of each one of said first and second video signals (IVS1, IVS2).

5. Method according to claims 1 or 2, or apparatus according to claims 3 or 4, wherein said combined video signal (SDIU) is fed from a base unit (BASU) to a camera unit (CAMH, ADU).

6. Method according to one of claims 1, 2 and 5, or apparatus according to one of claims 3 to 5, wherein said combined video signal (SDIU) has a format of a standardised-format single video signal, e.g. an SDI or HDSDI format signal having a data word length of 10 bits.

7. Method or apparatus according to claim 6, wherein said. combined video signal (SDIU) fed from said base unit (BASU) to said camera unit (CAMH, ADU) has a 270Mbit SDI format and wherein the camera output video signal is fed from said camera unit to said base unit as a 10-bit 270 Mbit SDI format signal.

8. Method or apparatus according to claim 7, wherein said first video signal (IVS1) is a teleprompter signal (TPS, TPVI) to the code words of which a length of 5 bits is assigned but from the resulting 32 possible values of which only 31 values are used, said length including the bit assigned to said minimum amplitude value (MIN1) and said dynamic range value (DR1) or said maximum amplitude value (MAX1), respectively, and wherein said second video signal (IVS2) is a playback signal (PBS, EXTVI) to the code words of which a length of 5 bits is assigned and from the resulting 32 possible values of which 32 values are used, said length including the bit assigned to said minimum amplitude value (MIN2) and said dynamic range value (DR2) or said maximum amplitude value (MAX2), respectively.

9. Method or apparatus according to claim 8 wherein, if in said encoding a combined binary code word in said combined video signal would get a value in a forbidden range '0' to '15', the value '32' is subtracted or the value '992' is added, and in the corresponding decoding the value '32' is added or the value '992' is subtracted if a received value is in the range '992' to '1007'.

10. Method or apparatus according to claim 7, wherein said first video signal (IVS1) is a teleprompter signal (TPS, TPVI) to the code words of which a length of 4 bits is assigned, said length including the bit assigned to said minimum amplitude value (MIN1) and said dynamic range value (DR1) or said maximum amplitude value (MAX1), respectively, and wherein said second video signal (IVS2) is a playback signal (PBS, EXTVI) to the code words of which a length of 5 bits is assigned, said length including the bit assigned to said minimum amplitude value (MIN2) and said dynamic range value (DR2) or said maximum amplitude value (MAX2), respectively.

11. Method or apparatus according to claim 10, wherein in the 10-bit SDI signal words the MSB bit remains unused, and if a combined binary code word in said combined video signal would get a value that is below '64' then the value '512' is added when encoding, or is correspondingly subtracted when decoding.

12. Method according to one of claims 1, 2 and 5 to 11, or apparatus according to one of claims 3 to 11, wherein the number - e.g. 16 - of quantised difference values ($Q_{y-0}$ - $Q_{y-15}$) arranged in a current luminance component data block is different from the number - e.g. 18 - of quantised difference values ($Q_{c-0}$ - $Q_{c-17}$) arranged in a current chrominance component data block.

13. Method according to one of claims 1 and 5 to 12, or apparatus according to one of claims 3 and 5 to 12, wherein, instead of one, two minimum amplitude values (MIN1, MIN2) in a current sample block are determined (MAXC, MINC) separately
for a left part of adjacent samples of the current sample block together with a right part of adjacent samples of the sample block adjacent to the left and
for a right part of adjacent samples of the current sample block together with a left part of adjacent samples of the sample block adjacent to the right,
and wherein in said current sample block, (SB) said first and second minimum amplitude values are subtracted from every corresponding sample in said current sample block before said quantising (QU);
and wherein a given one of said two minimum vales is assembled (ASSMUX) for a current data block.

14. Method according to one of claims 2 and 5 to 12, or apparatus according to one of claims 4 to 12 wherein, when encoding, two minimum amplitude values (MIN1, MIN2) in a current sample block were determined (MAXC, MINC) separately
for a left part of adjacent samples of the current sample block together with a right part of adjacent samples of the sample block adjacent to the left and
for a right part of adjacent samples of the current sample block together with a left part of adjacent samples of the sample block adjacent to the right,
and wherein in said current sample block, (SB) said first and second minimum amplitude values were subtracted from every corresponding sample in said current sample block before said quantising (QU),
and wherein a given one of said two minimum vales was assembled (ASSMUX) for a current data block,
and wherein in decoding, when adding (A) said minimum amplitude value to each one of said inversely quantised difference values, the corresponding one of said two minimum amplitude values is used therefore.

**Patentansprüche**

1. Verfahren zur Codierung eines ersten (IVS1) und eines zweiten (IVS2) Digitalvideosignals, deren Abtastwerte jeweils eine vorgewählte Originalwortlänge aufweisen, unter Verwendung von Komprimierung in ein kombiniertes Videosignal (SDIU), dessen Codewörter eine vorgewählte Hauptwortlänge aufweisen, die kleiner als zweimal die Originalwortlänge ist, wobei das Verfahren die folgenden Schritte umfasst:

   - sukzessives Bilden (PBF) aus Zeilen der ersten und zweiten Videosignale von Abtastblöcken für eine Luminanzkomponente (Y) und für zwei verschiedene Chrominanzkomponenten ($C_r$, $C_b$) eines jeden der ersten und zweiten Videosignale (IVS1, IVS2);
   - Bestimmen (MAXC, MINC) der Amplitudenmindest- (MIN1, MIN2) und der Amplitudenhöchst (MAX1, MAX2)-Werte in einem aktuellen Abtastblock;
   - Subtrahieren (SB) im aktuellen Abtastblock des Amplitudenmindestwerts von jedem Abtastwert im aktuellen Abtastblock und derartiges Quantisieren (QU) der resultierenden Differenzwerte, dass die Wortlänge der quantisierten Differenzwerte (COD1, COD2) eine vorgewählte erste Wortlänge für die quantisierten Differenzwerte des ersten Videosignals wird, und eine vorgewählte zweite Wortlänge für die quantisierten Differenzwerte des zweiten Videosignals wird, wobei die ersten und zweiten Wortlängen verschieden sein können, und wobei das Quantisieren durch den Dynamikbereichswert (DR1, DR2) im aktuellen Abtastblock kontrolliert wird, wobei der Dynamikbereichswert die Differenz (SA) zwischen dem Amplitudenhöchstwert und dem Amplitudenmindestwert im aktuellen Abtastblock darstellt;
   - derartiges Assemblieren (ASSMUX) für einen aktuellen Datenblock des kombinierten Videosignals (SDIU) jedes quantisierten Differenzwerts der ersten und zweiten Videosignale, dass die Bits eines quantisierten Differenzwerts des ersten Videosignals untere Bitpositionen (TPO - TP3) eines Datenworts des kombinierten Videosignals bilden, und die Bits eines entsprechenden quantisierten Differenzwerts des zweiten Videosignals obere Bitpositionen (PBO - PB4) eines Datenworts des kombinierten Videosignals bilden, wobei die oberen Bitpositionen benachbart zu den unteren Bitpositionen angeordnet sind, wobei die Bits der Datenwörter für den Amplitudenmindestwert (MIN1, MIN2) und den Dynamikbereichswert (DR1, DR2) des aktuellen Datenblocks oder für den Amplitudenmindestwert (MIN1, MIN2) und den Amplitudenhöchstwert (MAX1, MAX2) des aktuellen Datenblocks jeweils ein Bit pro Datenwort der quantifizierten Differenzwerte der ersten und zweiten Videosignale bilden;
   - sukzessives Ausgeben von Datenwörtern, die auf derartige Weise als das kombinierte Videosignal (SDIU) assembliert sind.

2. Verfahren zur Decodierung eines kombinierten Videosignals (SDIU), das zwei komprimierte Videosignale umfasst, in ein erstes (IVS1) und ein zweites (IVS2) Digitalvideosignal, deren Abtastwerte jeweils eine vorgewählte Originalwortlänge aufweisen, wobei die Codewörter des kombinierten Videosignals eine vorgewählte Hauptwortlänge aufweisen, die kleiner als zweimal die Originalwortlänge ist, wobei das Verfahren die folgenden Schritte umfasst:

   - Parsen (PARDMUX) von Codewörtern des kombinierten Videosignals (SDIU), um aus vorgewählten unteren Bitpositionen (TPO - TP3) - die eine erste Wortlänge eines jeden der Codewörter darstellen - die Bits von quantisierten Differenzwerten (COD1) des ersten Videosignals und aus vorgewählten oberen Bitpositionen (PBO - PB4) - die eine zweite Wortlänge von entsprechenden der Codewörter darstellen - die Bits von entsprechenden quantisierten Differenzwerten (COD2) des zweiten Videosignals zurückzugewinnen, wobei die oberen Bitpositionen benachbart zu den unteren Bitpositionen angeordnet sind, wobei die ersten und zweiten Wortlängen verschieden sein können, und um Datenwörter für einen Amplitudenmindestwert (MIN1, MIN2) und einen Dynamikbereichswert (DR1, DR2) oder für einen Amplitudenmindestwert (MIN1 MIN2) und einen Amplitudenhöchstwert (MAX1, MAX2) eines aktuellen Datenblocks des ersten und des zweiten Digitalvideosignals zurückzugewinnen, wobei die Bits der Datenwörter für den Amplitudenmindestwert (MIN1, MIN2) und den Dynamikbereichswert (DR1, DR2) bzw. den Amplitudenhöchstwert (MAX1, MAX2) des aktuellen Datenblocks ein Bit pro Codewort der quantisierten Differenzwerte der ersten und zweiten Videosignale bilden, und wobei der Dynamikbereichswert die Differenz zwischen dem Amplitudenhöchstwert und dem Amplitudenmindestwert im aktuellen Datenblock darstellt;
   - inverses Quantisieren (IQU) im aktuellen Datenblock der quantisierten Differenzwerte (COD1, COD2) unter der Kontrolle des Dynamikbereichswerts und Addieren (A) des Amplitudenmindestwerts zu jedem der invers quantisierten Differenzwerte, wobei die Wortlänge der entsprechend kombinierten Werte die vorgewählte Originalwortlänge für das erste Videosignal und das zweite Videosignal wird;
   - Bilden (PBF) aus sukzessiven Datenblöcken von Abtastwörtern und Ausgeben (OVS1) derselben für Zeilen einer Luminanzkomponente (Y) und zweier verschiedener Chrominanzkomponenten ($C_r$, $C_b$) eines jeden der ersten und zweiten Videosignale (IVS1, IVS2).

3. Vorrichtung zum Codieren eines ersten (IVs1) und eines zweiten (IVS2) Digitalvideosignals, deren Abtastwerte jeweils eine vorgewählte Originalwortlänge aufweisen, unter Verwendung von Komprimierung in ein kombiniertes Videosignal (SDIU), dessen Codewörter eine vorgewählte Hauptwortlänge aufweisen, die kleiner als zweimal die Originalwortlänge ist, wobei die Vorrichtung umfasst:

- Mittel (PBF), die so ausgelegt sind, dass sie aus Zeilen der ersten und zweiten Videosignal sukzessiv Abtastblöcke für eine Luminanzkomponente (Y) und für zwei verschiedene Chrominanzkomponenten ($C_r$, $C_b$) eines jeden der ersten und zweiten Videosignale (IVS1, IVS2) bilden;

- Mittel (MAXC, MINC), die so ausgelegt sind, dass sie die Amplitudenmindest- (MIN1, MIN2) und die Amplitudenhöchst (MAX1, MAX2)-Werte in einem aktuellen Abtastblock bestimmen;

- Mittel (SB), die so ausgelegt sind, dass sie im aktuellen Abtastblock den Amplitudenmindestwert von jedem Abtastwert im aktuellen Abtastblock subtrahieren;

- Mittel (QU), die so ausgelegt sind, dass sie die resultierenden Differenzwerte derart quantisieren, dass die Wortlänge der quantisierten Differenzwerte (COD1, COD2) eine vorgewählte erste Wortlänge für die quantisierten Differenzwerte des ersten Videosignals wird, und eine vorgewählte zweite Wortlänge für die quantisierten Differenzwerte des zweiten Videosignals wird, wobei die ersten und zweiten Wortlängen verschieden sein können, und wobei das Quantisieren durch den Dynamikbereichswert (DR1, DR2) im aktuellen Abtastblock kontrolliert wird, wobei der Dynamikbereichswert die Differenz (SA) zwischen dem Amplitudenhöchstwert und dem Amplitudenmindestwert im aktuellen Abtastblock darstellt;

- Mittel (ASSMUX), die so ausgelegt sind, dass sie für einen aktuellen Datenblock des kombinierten Videosignals (SDIU) jeden quantisierten Differenzwert der ersten und zweiten Videosignale derart quantisieren, dass die Bits eines quantisierten Differenzwerts des ersten Videosignals untere Bitpositionen (TPO - TP3) eines Datenworts des kombinierten Videosignals bilden, und die Bits eines entsprechenden Differenzwerts des zweiten Videosignals obere Bitpositionen (PBO - PB4) eines Datenworts des kombinierten Videosignals bilden, wobei die oberen Bitpositionen benachbart zu den unteren Bitpositionen angeordnet sind, wobei die Bits der Datenwörter für den Amplitudenmindestwert (MIN1, MIN2) und den Dynamikbereichswert (DR1, DR2) des aktuellen Datenblocks oder für den Amplitudenmindestwert (MIN1, MIN2) und den Amplitudenhöchstwert (MAX1, MAX2) des aktuellen Datenblocks jeweils ein Bit pro Datenwort der quantifizierten Differenzwerte der ersten und zweiten Videosignale bilden;

sukzessiv Datenwörter ausgeben, die auf derartige Weise als das kombinierte Videosignal (SDIU) assembliert sind.

4. Vorrichtung zum Decodieren eines kombinierten Videosignals (SDIU), das zwei komprimierte Videosignale umfasst, in ein erstes (IVS1) und ein zweites (IVS2) Digitalvideosignal, deren Abtastwerte jeweils eine vorgewählte Originalwortlänge aufweisen, wobei die Codewörter des kombinierten Videosignals eine vorgewählte Hauptwortlänge aufweisen, die kleiner als zweimal die Originalwortlänge ist, wobei die Vorrichtung umfasst:

- Mittel (PARDMUX), die so ausgelegt sind, dass sie Codewörter des kombinierten Videosignals (SDIU) parsen, um aus vorgewählten unteren Bitpositionen (TPO - TP3) - die eine erste Wortlänge eines jeden der Codewörter darstellen - die Bits von quantisierten Differenzwerten (COD1) des ersten Videosignals und aus vorgewählten oberen Bitpositionen (PBO - PB4) - die eine zweite Wortlänge von entsprechenden der Codewörter darstellen - die Bits von entsprechenden quantisierten Differenzwerten (COD2) des zweiten Videosignals zurückzugewinnen, wobei die oberen Bitpositionen benachbart zu den unteren Bitpositionen angeordnet sind, wobei die ersten und zweiten Wortlängen verschieden sein können, und um Datenwörter für einen Amplitudenmindestwert (MIN1, MIN2) und einen Dynamikbereichswert (DR1, DR2) oder für einen Amplitudenmindestwert (MIN1 MIN2) und einen Amplitudenhöchstwert (MAX1, MAX2) eines aktuellen Datenblocks des ersten und des zweiten Digitalvideosignals rückzugewinnen, wobei die Bits der Datenwörter für den Amplitudenmindestwert (MIN1, MIN2) und den Dynamikbereichswert (DR1, DR2) bzw. den Amplitudenhöchstwert (MAX1, MAX2) des aktuellen Datenblocks ein Bit pro Codewort der quantisierten Differenzwerte der ersten und zweiten Videosignale bilden, und wobei der Dynamikbereichswert die Differenz zwischen dem Amplitudenhöchstwert und dem Amplitudenmindestwert im aktuellen Datenblock darstellt;

- Mittel (IQU), die so ausgelegt sind, dass sie im aktuellen Datenblock die quantisierten Differenzwerte (COD1, COD2) unter der Kontrolle des Dynamikbereichswerts invers quantisieren und den Amplitudenmindestwert zu jedem der invers quantisierten Differenzwerte addieren (A), wobei die Wortlänge der entsprechend kombinierten Werte die vorgewählte Originalwortlänge für das erste Videosignal und das zweite Videosignal wird;

- Mittel (PBF), die so ausgelegt sind, dass sie aus sukzessiven Datenblöcken Abtastwörter für Zeilen einer Luminanzkomponente (Y) und zweier verschiedener Chrominanzkomponenten (C$_r$, C$_b$) eines jeden der ersten und zweiten Videosignale (IVS1, IVS2) bilden und ausgeben (OVS1).

5. Verfahren nach Anspruch 1 der 2 oder Vorrichtung nach Anspruch 3 oder 4, wobei das kombinierte Videosignal (SDIU) von einer Basiseinheit (BASU) in eine Kameraeinheit (CAMH, ADU) eingegeben wird.

6. Verfahren nach einem der Ansprüche 1, 2 und 5 oder Vorrichtung nach einem der Ansprüche 3 bis 5, wobei das kombinierte Videosignal (SDIU) ein Format eines Einzelvideosignals eines standardisierten Formats, z. B. eines SDI- oder HSDI-Formats, mit einer Datenwortlänge von 10 Bits aufweist.

7. Verfahren oder Vorrichtung nach Anspruch 6, wobei das kombinierte Signal (SDIU), das von der Basiseinheit (BASU) in die Kameraeinheit (CAMH, ADU) eingegeben wird, ein 270-Mbit-SDI-Format aufweist, und wobei das Kamera-Ausgangsvideosignal von der Kameraeinheit in die Basiseinheit als ein Signal eines 10-Bit-270-Mbit-SDI-Formats eingegeben wird.

8. Verfahren oder Vorrichtung nach Anspruch 7, wobei das erste Videosignal (IVS1) ein Teleprompter-Signal (TPS, TPV1) ist, dessen Codewörtern eine Länge von 5 Bits zugeordnet ist, aber von dessen resultierenden 32 möglichen Werten nur 31 Werte verwendet werden, wobei die Länge das Bit umfasst, das dem Amplitudenmindestwert (MIN1) und dem Dynamikbereichswert (DR1) bzw. dem Amplitudenhöchstwert (MAX1) zugeordnet ist, und wobei das zweite Videosignal (IVS2) ein Wiedergabesignal (PBS, EXTVI) ist, dessen Codewörtern eine Länge von 5 Bits zugeordnet ist und von dessen resultierenden 32 möglichen Werten 32 Werte verwendet werden, wobei die Länge das Bit umfasst, das dem Amplitudenmindestwert (MIN2) und dem Dynamikbereichswert (DR2) bzw. dem Amplitudenhöchstwert (MAX2) zugeordnet ist.

9. Verfahren oder Vorrichtung nach Anspruch 8, wobei, wenn beim Codieren ein kombiniertes Binärcodewort im kombinierten Videosignal ein Wert in einem verbotenen Bereich '0' bis '15' werden würde, der Wert '32' subtrahiert wird oder der Wert '992' addiert wird, und beim entsprechenden Decodieren der Wert '32' addiert wird und der Wert '992' subtrahiert wird, wenn ein empfangener Wert im Bereich '992' bis '1007' liegt.

10. Verfahren oder Vorrichtung nach Anspruch 7, wobei das erste Videosignal (IVS1) ein Teleprompter-Signal (TPS, TPV1) ist, dessen Codewörtern eine Länge von 4 Bits zugeordnet ist, wobei die Länge das Bit umfasst, das dem Amplitudenmindestwert (MIN1) und dem Dynamikbereichswert (DR1) bzw. dem Amplitudenhöchstwert (MAX1) zugeordnet ist, und wobei das zweite Videosignal (IVS2) ein Wiedergabesignal (PBS, EXTVI) ist, dessen Codewörtern eine Länge von 5 Bits zugeordnet ist, wobei die Länge das Bit umfasst, das dem Amplitudenmindestwert (MIN2) und dem Dynamikbereichswert (DR2) bzw. dem Amplitudenhöchstwert (MAX2) zugeordnet ist.

11. Verfahren oder Vorrichtung nach Anspruch 10, wobei in den 10-Bit-SDI-Signalwörtern das MSB-Bit ungenutzt bleibt und dann, wenn ein kombiniertes Binärcodewort im kombinierten Videosignal ein Wert werden würde, der unter '64' ist, der Wert '512' beim Codieren addiert wird und beim Decodieren entsprechend subtrahiert wird.

12. Verfahren nach einem der Ansprüche 1, 2 und 5 bis 11 oder Vorrichtung nach einem der Ansprüche 3 bis 11, wobei die Anzahl - z. B. 16 - von quantisierten Differenzwerten (Q$_{y-0}$ - Q$_{y-15}$), die in einem aktuellen Luminanzkomponenten-Datenblock angeordnet sind, von der Anzahl - z. B. 18 - von quantisierten Differenzwerten (Q$_{c-0}$ - Q$_{c-17}$), die in einem aktuellen Chrominanzkomponenten-Datenblock angeordnet sind, verschieden ist.

13. Verfahren nach einem der Ansprüche 1 und 5 bis 12 oder Vorrichtung nach einem der Ansprüche 3 und 5 bis 12, wobei anstelle von einem zwei Amplitudenmindestwerte (MIN1, MIN2) in einem aktuellen Abtastblock getrennt für einen linken Teil von benachbarten Abtastwerten des aktuellen Abtastblocks zusammen mit einem rechten Teil von benachbarten Abtastwerten des Abtastblocks benachbart zum linken und für einen rechten Teil von benachbarten Abtastwerten des aktuellen Abtastblocks zusammen mit einem linken Teil von benachbarten Abtastwerten des Abtastblocks benachbart zum rechten bestimmt werden(MAXC, MINC), und wobei im aktuellen Abtastblock die ersten und zweiten Amplitudenmindestwerte von jedem entsprechenden Abtastwert im aktuellen Abtastblock vor dem Quantisieren (QU) subtrahiert werden (SB); und wobei ein bestimmter der beiden Mindestwerte für einen aktuellen Datenblock assembliert wird (ASSMUX).

14. Verfahren nach einem der Ansprüche 2 und 5 bis 12 oder Vorrichtung nach einem der Ansprüche 4 bis 12, wobei beim Codieren zwei Amplitudenmindestwerte (MINI, MIN2) in einem aktuellen Abtastblock getrennt(MAXC, MINC) für einen linken Teil von benachbarten Abtastwerten des aktuellen Abtastblocks zusammen mit einem rechten Teil von benachbarten Abtastwerten des Abtastblocks benachbart zum linken und

für einen rechten Teil von benachbarten Abtastwerten des aktuellen Abtastblocks zusammen mit einem linken Teil von benachbarten Abtastwerten des Abtastblocks benachbart zum rechten bestimmt wurden, und

wobei im aktuellen Abtastblock die ersten und zweiten Mindestamplitudenwerte von jedem entsprechenden Abtastwert im aktuellen Abtastblock vor dem Quantisieren (QU) subtrahiert wurden (SB),

und wobei ein bestimmter der beiden Mindestwerte für einen aktuellen Datenblock assembliert wurde (ASSMUX), und wobei beim Decodieren, wenn der Amplitudenmindestwert zu jedem der invers quantisierten Differenzwerte addiert (A) wird, der entsprechende der zwei Amplitudenmindestwerte dafür verwendet wird.

## Revendications

1. Procédé pour coder un premier (IVS1) et un second (IVS2) signal vidéo numérique en utilisant une compression, les échantillons de chacun d'eux ayant une longueur de mot d'origine présélectionnée, en un signal vidéo combiné (SDIU), dont les mots de code ont une longueur de mot principale présélectionnée qui est inférieure à deux fois ladite longueur de mot d'origine, ledit procédé comprenant les étapes suivantes :

   - à partir de lignes desdits premier et second signaux vidéo, la formation de manière successive (PBF) de blocs d'échantillons pour une composante de luminance (Y) et pour deux composantes de chrominance différentes ($C_r$, $C_b$) de chacun desdits premier et second signaux vidéo (IVS1, IVS2) ;
   - la détermination (MAXC, MINC) des valeurs d'amplitude minimale (MIN1, MIN2) et maximale (MAX1, MAX2) dans un bloc d'échantillons courant ;
   - dans ledit bloc d'échantillons courant, la soustraction (SB) de ladite valeur d'amplitude minimale de tous les échantillons dans ledit bloc d'échantillons courant et la quantification (QU) des valeurs de différence résultantes de telle sorte que la longueur de mot des valeurs de différence quantifiées (COD1, COD2) prend une première longueur de mot présélectionnée pour les valeurs de différence quantifiées dudit premier signal vidéo et prend une seconde longueur de mot présélectionnée pour les valeurs de différence quantifiées dudit second signal vidéo, lesdites première et seconde longueurs de mot pouvant être différentes, et ce par quoi ladite quantification est commandée par la valeur de plage dynamique (DR1, DR2) dans ledit bloc d'échantillons courant, ladite valeur de plage dynamique représentant la différence (SA) entre ladite valeur d'amplitude maximale et ladite valeur d'amplitude minimale dans ledit bloc d'échantillons courant ;
   - l'assemblage (ASSMUX), pour un bloc de données courant dudit signal vidéo combiné (SDIU), de chaque valeur de différence quantifiée desdits premier et second signaux vidéo de telle sorte que les bits d'une valeur de différence quantifiée dudit premier signal vidéo forment des positions de bit inférieures (TP0-TP3) d'un mot de données dudit signal vidéo combiné et les bits d'une valeur de différence quantifiée correspondante dudit second signal vidéo forment des positions de bit supérieures (PB0-PB4) d'un mot de données dudit signal vidéo combiné, lesdites positions de bit supérieures étant disposées adjacentes auxdites positions de bit inférieures, ce par quoi les bits des mots de données pour ladite valeur d'amplitude minimale (MIN1, MIN2) et ladite valeur de plage dynamique (DR1, DR2) dudit bloc de données courant, ou pour ladite valeur d'amplitude minimale (MIN1, MIN2) et ladite valeur d'amplitude maximale (MAX1, MAX2) dudit bloc de données courant, forment chacun un bit par mot de données desdites valeurs de différence quantifiées desdits premier et second signaux vidéo ;
   - l'émission de manière successive de mots de données assemblés de la même façon que ledit signal vidéo combiné (SDIU).

2. Procédé pour décoder un signal vidéo combiné (SDIU) comprenant deux signaux vidéo compressés en un premier (IVS1) et un second (IVS2) signal vidéo numérique, les échantillons de chacun d'eux ayant une longueur de mot d'origine présélectionnée, ce par quoi les mots de code dudit signal vidéo combiné ont une longueur de mot principale présélectionnée qui est inférieure à deux fois ladite longueur de mot d'origine, ledit procédé comprenant les étapes suivantes :

   - l'analyse (PARDMUX) de mots de code dudit signal vidéo combiné (SDIU), afin de retrouver à partir de positions de bit inférieures présélectionnées (TP0-TP3) - représentant une première longueur de mot de chacun desdits mots de code - les bits de valeurs de différence quantifiées (COD1) dudit premier signal vidéo et à partir de positions de bit supérieures présélectionnées (PB0-PB4) - représentant une seconde longueur de mot de mots de code correspondants desdits mots de code - les bits de valeurs de différence quantifiées correspondantes (COD2) dudit second signal vidéo, lesdites positions de bit supérieures étant disposées adjacentes auxdites positions de bit inférieures, lesdites première et seconde longueurs de mot pouvant être différentes, et pour retrouver des mots de données pour une valeur d'amplitude minimale (MIN1, MIN2) et une valeur de plage dynamique (DR1, DR2), ou pour une valeur d'amplitude minimale (MIN1, MIN2) et une valeur d'amplitude maximale (MAX1, MAX2), d'un bloc de données courant dudit premier et dudit second signal vidéo numérique, ce par quoi les bits des mots de données pour ladite valeur d'amplitude minimale (MIN1, MIN2) et ladite valeur de plage dynamique (DR1, DR2) ou ladite valeur d'amplitude maximale (MAX1, MAX2), respectivement, dudit bloc de données courant forment chacun un bit par mot de code desdites valeurs de différence quantifiées desdits premier et second signaux vidéo, et ce par quoi ladite valeur de plage dynamique représente la différence entre ladite valeur d'amplitude maximale et ladite valeur d'amplitude minimale dans ledit bloc de données courant ;

- dans ledit bloc de données courant, la quantification inverse (IQU) desdites valeurs de différence quantifiées (COD1, COD2) sous la commande de ladite valeur de plage dynamique et l'ajout (A) de ladite valeur d'amplitude minimale à chacune desdites valeurs de différence résultant de la quantification inverse, ce par quoi la longueur de mot des valeurs combinées de manière correspondante prend ladite longueur de mot d'origine présélectionnée pour ledit premier signal vidéo et ledit second signal vidéo ;

- à partir de blocs de données successifs, la formation (BPF) et l'émission (OVS1) de mots d'échantillon pour des lignes d'une composante de luminance (Y) et de deux composantes de chrominance différentes ($C_r$, $C_b$) de chacun desdits premier et second signaux vidéo (IVS1, IVS2).

3. Appareil pour coder un premier (IVS1) et un second (IVS2) signal vidéo numérique en utilisant une compression, les échantillons de chacun d'eux ayant une longueur de mot d'origine présélectionnée, en un signal vidéo combiné (SDIU), dont les mots de code ont une longueur de mot principale présélectionnée qui est inférieure à deux fois ladite longueur de mot d'origine, ledit appareil comprenant :

- un moyen (PBF) qui est adapté pour former successivement, à partir de lignes desdits premier et second signaux vidéo, des blocs d'échantillons pour une composante de luminance (Y) et pour deux composantes de chrominance différentes ($C_r$, $C_b$) de chacun desdits premier et second signaux vidéo (IVS1, IVS2) ;

- un moyen (MAXC, MINC) qui est adapté pour déterminer les valeurs d'amplitude minimale (MIN1, MIN2) et maximale (MAX1, MAX2) dans un bloc d'échantillons courant ;

- un moyen (SB) qui est adapté pour soustraire, dans ledit bloc d'échantillons courant, ladite valeur d'amplitude minimale de tous les échantillons dans ledit bloc d'échantillons courant ;

- un moyen (QU) qui est adapté pour quantifier les valeurs de différence résultantes de telle sorte que la longueur de mot des valeurs de différence quantifiées (COD1, COD2) prend une première longueur de mot présélectionnée pour les valeurs de différence quantifiées dudit premier signal vidéo et prend une seconde longueur de mot présélectionnée pour les valeurs de différence quantifiées dudit second signal vidéo, lesdites première et seconde longueurs de mot pouvant être différentes, et ce par quoi ladite quantification est commandée par la valeur de plage dynamique (DR1, DR2) dans ledit bloc d'échantillons courant, ladite valeur de plage dynamique représentant la différence (SA) entre ladite valeur d'amplitude maximale et ladite valeur d'amplitude minimale dans ledit bloc d'échantillons courant ;

- un moyen (ASSMUX) qui est adapté pour assembler, pour un bloc de données courant dudit signal vidéo combiné (SDIU), chaque valeur de différence quantifiée desdits premier et second signaux vidéo de telle sorte que les bits d'une valeur de différence quantifiée dudit premier signal vidéo forment des positions de bit inférieures (TP0-TP3) d'un mot de données dudit signal vidéo combiné et les bits d'une valeur de différence quantifiée correspondante dudit second signal vidéo forment des positions de bit supérieures (PB0-PB4) d'un mot de données dudit signal vidéo combiné, lesdites positions de bit supérieures étant disposées adjacentes auxdites positions de bit inférieures, ce par quoi les bits des mots de données pour ladite valeur d'amplitude minimale (MIN1, MIN2) et ladite valeur de plage dynamique (DR1, DR2) dudit bloc de données courant, et pour ladite valeur d'amplitude minimale (MIN1, MIN2) et ladite valeur d'amplitude maximale (MAX1, MAX2) dudit bloc de données courant, forment chacun un bit par mot de données desdites valeurs de différence quantifiées desdits premier et second signaux vidéo ;

- et pour émettre de manière successive des mots de données assemblés de la même façon que ledit signal vidéo combiné (SDIU).

4. Appareil pour décoder un signal vidéo combiné (SDIU) comprenant deux signaux vidéo compressés en un premier (IVS1) et un second (IVS2) signal vidéo numérique, les échantillons de chacun d'eux ayant une longueur de mot d'origine présélectionnée, ce par quoi les mots de code dudit signal vidéo combiné ont une longueur de mot principale présélectionnée qui est inférieure à deux fois ladite longueur de mot d'origine, ledit appareil comprenant :

- un moyen (PARDMUX) qui est adapté pour analyser des mots de code dudit signal vidéo combiné (SDIU), afin de retrouver à partir de positions de bit inférieures présélectionnées (TP0-TP3) - représentant une première longueur de mot de chacun desdits mots de code - les bits de valeurs de différence quantifiées (COD1) dudit premier signal vidéo et à partir de positions de bit supérieures présélectionnées (PB0-PB4) - représentant une seconde longueur de mot de mots de code correspondants desdits mots de code - les bits de valeurs de différence quantifiées correspondantes (COD2) dudit second signal vidéo, lesdites positions de bit supérieures étant disposées adjacentes auxdites positions de bit inférieures, lesdites première et seconde longueurs de mot pouvant être différentes, et de retrouver des mots de données pour une valeur d'amplitude minimale (MIN1, MIN2) et une valeur de plage dynamique (DR1, DR2) ou pour une valeur d'amplitude minimale (MIN1, MIN2) et une valeur d'amplitude maximale (MAX1, MAX2), d'un bloc de données courant dudit premier et dudit second signal vidéo numérique, ce par quoi les bits des mots de données pour ladite valeur d'amplitude minimale (MIN1, MIN2) et ladite valeur de plage dynamique (DR1, DR2) ou ladite valeur d'amplitude maximale (MAX1, MAX2), respectivement, dudit bloc de données courant forment chacun un bit par mot de code desdites valeurs de différence quantifiées desdits premier et second signaux vidéo, et ce par quoi ladite valeur de plage dynamique représente la différence entre ladite valeur d'amplitude maximale et ladite valeur d'amplitude minimale dans ledit bloc de données courant ;

- un moyen (IQU) qui est adapté pour effectuer une quantification inverse, dans ledit bloc de données courant, desdites valeurs de différence quantifiées (COD1, COD2) sous la commande de ladite valeur de plage dynamique et ajouter (A) ladite valeur d'amplitude minimale à chacune desdites valeurs de différence ayant subi une quantification inverse, ce par quoi la longueur de mot des valeurs combinées de manière correspondante prend ladite longueur de mot d'origine présélectionnée pour ledit premier signal vidéo et ledit second signal vidéo ;

- un moyen (BPF) qui est adapté pour former et émettre (OVS1), à partir de blocs de données successifs, des mots d'échantillon pour des lignes d'une composante de luminance (Y) et de deux composantes de chrominance différentes ($C_r$, $C_b$) de chacun desdits premier et second signaux vidéo (IVS1, IVS2).

5. Procédé selon la revendication 1 ou la revendication 2, ou appareil selon la revendication 3 ou la revendication 4, dans lequel ledit signal vidéo combiné (SDIU) est fourni depuis une unité de base (BASU) vers une unité de caméra (CAMH, ADU).

6. Procédé selon l'une des revendications 1, 2 et 5, ou appareil selon l'une des revendications 3 à 5, dans lequel ledit signal vidéo combiné (SDIU) a un format d'un signal vidéo unique de format normalisé, par exemple un signal de format SDI ou HDSDI ayant une longueur de mot de données de 10 bits.

7. Procédé ou appareil selon la revendication 6, dans lequel ledit signal vidéo combiné (SDIU) fourni depuis ladite unité de base (BASU) vers ladite unité de caméra (CAMH, ADU) a un format SDI 270 Mbits et dans lequel le signal vidéo de sortie de caméra est fourni depuis ladite unité de caméra vers ladite unité de base en tant que signal de format SDI 270 Mbits à 10 bits.

8. Procédé ou appareil selon la revendication 7, dans lequel ledit premier signal vidéo (IVS1) est un signal de téléprompteur (TPS, TPVI) aux mots de code duquel une longueur de 5 bits est affectée mais dont seulement 31 valeurs sont utilisées parmi les 32 valeurs possibles résultantes, ladite longueur comprenant le bit affecté à ladite valeur d'amplitude minimale (MIN1) et ladite valeur de plage dynamique (DR1) ou ladite valeur d'amplitude maximale (MAX1), respectivement, et dans lequel ledit second signal vidéo (IVS2) est un signal de lecture (PBS, EXTVI) aux mots de code duquel une longueur de 5 bits est affectée et dont 32 valeurs sont utilisées parmi les 32 valeurs possibles résultantes, ladite longueur comprenant le bit affecté à ladite valeur d'amplitude minimale (MIN2) et ladite valeur de plage dynamique (DR2) ou ladite valeur d'amplitude maximale (MAX2), respectivement.

9. Procédé ou appareil selon la revendication 8 dans lequel, si dans ledit codage un mot de code binaire combiné dans ledit signal vidéo combiné prend une valeur dans une plage interdite de '0' à '15', la valeur '32' est soustraite ou la valeur '992' est ajoutée, et dans le décodage correspondant la valeur '32' est ajoutée ou la valeur '992' est soustraite si une valeur reçue est dans la plage allant de '992' à '1007'.

10. Procédé ou appareil selon la revendication 7, dans lequel ledit premier signal vidéo (IVS1) est un signal de téléprompteur (TPS, TPVI) aux mots de code duquel une longueur de 4 bits est affectée, ladite longueur comprenant le bit affecté à ladite valeur d'amplitude minimale (MIN1) et ladite valeur de plage dynamique (DR1) ou ladite valeur d'amplitude maximale (MAX1), respectivement, et dans lequel ledit second signal vidéo (IVS2) est un signal de lecture (PBS, EXTVI) aux mots de code duquel une longueur de 5 bits est affectée, ladite longueur comprenant le bit affecté à ladite valeur d'amplitude minimale (MIN2) et ladite valeur de plage dynamique (DR2) ou ladite valeur d'amplitude maximale (MAX2), respectivement.

11. Procédé ou appareil selon la revendication 10, dans lequel dans les mots de signal SDI à 10 bits le bit MSB reste inutilisé, et si un mot de code binaire combiné dans ledit signal vidéo combiné prend une valeur qui est inférieure à '64' alors la valeur '512' est ajoutée lors du codage, ou est soustraite de manière correspondante lors du décodage.

12. Procédé selon l'une des revendications 1, 2 et 5 à 11, ou appareil selon l'une des revendications 3 à 11, dans lequel le nombre - par exemple 16 - de valeurs de différence quantifiées ($Q_{y-0}$-$Q_{y-15}$) disposées dans un bloc de données de composante de luminance courant est différent du nombre - par exemple 18 - de valeurs de différence quantifiées ($Q_{c-0}$-$Q_{c-17}$) disposées dans un bloc de données de composante de chrominance courant.

13. Procédé selon l'une des revendications 1 et 5 à 12, ou appareil selon l'une des revendications 3 et 5 à 12, dans lequel, au lieu d'une, deux valeurs d'amplitude minimales (MIN1, MIN2) dans un bloc d'échantillons courant sont déterminées (MAXC, MINC) séparément
pour une partie gauche d'échantillons adjacents du bloc d'échantillons courant avec une partie droite d'échantillons adjacents du bloc d'échantillons adjacente à la gauche et
pour une partie droite d'échantillons adjacents du bloc d'échantillons courant avec une partie gauche d'échantillons adjacents du bloc d'échantillons adjacente à la droite,
et dans lequel dans ledit bloc d'échantillons courant, (SB) lesdites première et seconde valeurs d'amplitude minimales sont soustraites de tous les échantillons correspondants dans ledit bloc d'échantillons courant avant ladite quantification (QU) ;
et dans lequel une valeur donnée desdites deux valeurs minimales est assemblée (ASSMUX) pour un bloc de données courant.

14. Procédé selon l'une des revendications 2 et 5 à 12, ou appareil selon l'une des revendications 4 à 12 dans lequel, lors du codage, deux valeurs d'amplitude minimales (MIN1, MIN2) dans un bloc d'échantillons courant ont été déterminées (MAXC, MINC) séparément
pour une partie gauche d'échantillons adjacents du bloc d'échantillons courant avec une partie droite d'échantillons adjacents du bloc d'échantillons adjacente à la gauche et
pour une partie droite d'échantillons adjacents du bloc d'échantillons courant avec une partie gauche d'échantillons adjacents du bloc d'échantillons adjacente à la droite,
et dans lequel dans ledit bloc d'échantillons courant, (SB) lesdites première et seconde valeurs d'amplitude minimales ont été soustraites de tous les échantillons correspondants dans ledit bloc d'échantillons courant avant ladite quantification (QU),
et dans lequel une valeur donnée desdites deux valeurs minimales a été assemblée (ASSMUX) pour un bloc de données courant,
et dans lequel dans le décodage, lors de l'ajout (A) de ladite valeur d'amplitude minimale à chacune desdites valeurs de différence ayant subi une quantification inverse, la valeur d'amplitude minimale correspondante desdites deux valeurs d'amplitude minimales est par conséquent utilisée.

Fig.1

Fig.2

Fig.3

**Fig.4**

**Fig.5**

| Blanking | SAV | Active Video Line | EAV |
|----------|-----|-------------------|-----|

Line time

**Fig.7**

SAV  pixel-0 pixel-1 pixel-2 pixel-3     pixel-718  pixel-719     EAV

$3FF,000,000,HVF,C_{b0},Y_0, C_{r0},Y_1,C_{b1},Y_2,C_{r1},Y_3; \cdots \rightarrow \cdots C_{b359},Y_{718},C_{r359},Y_{719},3FF,000,000,HVF,$

**Fig.8**

SAV      EAV

Line 1

Optional Video Data

Line 23/24

Field 1 Active Video

Field 1

Line 312

Optional Video Data

Line 336

Field 2 Active Video

Field 2

Line 625

**Fig.6**

Line time

MSB 9

· 

· }0...30

·

5

4

·

· }0...31

·

LSB 0

**Fig.9**

| Qy-0 | Qy-1 | Qy-2 | Qy-3 | Qy-4 | Qy-5 | Qy-6 | Qy-7 | Qy-8 | Qy-9 | Qy-10 | Qy-11 | Qy-12 | Qy-13 | Qy-14 | Qy-15 |
|---|---|---|---|---|---|---|---|---|---|---|---|---|---|---|---|
| Highest group value (8 bit) | | | | | | | | Lowest group value (8 bit) | | | | | | | |

**Fig.10**

| Qc-0 | Qc-1 | Qc-2 | Qc-3 | Qc-4 | Qc-5 | Qc-6 | Qc-7 | Qc-8 | Qc-9 | Qc-10 | Qc-11 | Qc-12 | Qc-13 | Qc-14 | Qc-15 | Qc-16 | Qc-17 |
|---|---|---|---|---|---|---|---|---|---|---|---|---|---|---|---|---|---|
| Highest group value (8 bit) | | | | | | | | Lowest group value (8 bit) | | | | | | | | * | * |

**Fig.11**

| 4-bit TPS | 5-bit PBS | MSB |
|-----------|-----------|-----|

| TP0 - TP1 - TP2 - TP3 -PB0 -  PB1 - PB2 - PB3 - PB4 - MSB |
|---|

## Fig.12

picture_in :="/Pictures/Totaltest_BnW.bmp"

PICTIN := READBMP(picture_in)

_____ number of bits used for quantisation _____

$n := 2$

_____ properties of the picture _____

XMAX := cols (PICTIN)

YMAX := rows (PICTIN)

XMAX = 768

YMAX = 768

_____ Crop horizontal resolution to multiples of 16 _____

$$XMAX := 16 \cdot floor\left(\frac{XMAX}{16}\right)$$

XMAX = 768

## Fig.13

EP 1 667 467 B1

| PICTDECOD:= | $y \longleftarrow 0$ |
|---|---|
| | while $y < $ YMAX |
| | $\quad (x \longleftarrow 0)$ |
| | $\quad$ while $x < $ XMAX |
| | $\qquad$ MIN $\longleftarrow 255$ |
| | $\qquad$ MAX $\longleftarrow 0$ |
| | $\qquad i \longleftarrow 0$ |
| | $\qquad$ while $i < 16$ |
| | $\qquad\quad$ MIN $\longleftarrow$ PICTIN$_{y,x+1}$ if PICTIN$_{y,x+1} < $ MIN |
| | $\qquad\quad$ MAX $\longleftarrow$ PICTIN$_{y,x+1}$ if PICTIN$_{y,x+1} > $ MAX |
| | $\qquad\quad i \longleftarrow i+1$ |
| | $\qquad i \longleftarrow 0$ |
| | $\qquad$ while $i < 16$ |
| | $\qquad\quad$ PICTCOD$_{y,x+1} \longleftarrow$ trunc$\left[\left[\dfrac{\left(\text{PICTIN}_{y,x+1} - \text{MIN}\right)\cdot\left(2^n - 1\right)}{\text{MAX} - \text{MIN}}\right] + 0.5\right]$ if MAX $\neq$ MIN |
| | $\qquad\quad$ PICTCOD$_{y,x+1} \longleftarrow 0$ if MAX $=$ MIN |
| | $\qquad\quad i \longleftarrow i + 1$ |
| | $\qquad$ PICTCOD$_{\text{YMAX}+y,x} \longleftarrow$ MIN |
| | $\qquad$ PICTCOD$_{\text{YMAX}+y,x+1} \longleftarrow$ MAX |
| | $\qquad x \longleftarrow x + 16$ |
| | $\quad y \longleftarrow y + 1$ |
| | PICTCOD |

**Fig.14**

$$PICTDECOD := \begin{array}{l} y \leftarrow 0 \\ \text{while } y < YMAX \\ \quad (x \leftarrow 0) \\ \quad \text{while } x < XMAX \\ \qquad MIN \leftarrow PICTCOD_{YMAX+y,x} \\ \qquad MAX \leftarrow PICTCOD_{YMAX+y,x+1} \\ \qquad i \leftarrow 0 \\ \qquad \text{while } i < 16 \\ \qquad\quad PICTDECOD_{y,x+1} \leftarrow \left[ \dfrac{(MAX-MIN) \cdot PICTCOD_{y,x+1}}{2^n - 1} \right] + MIN \\ \qquad\quad i \leftarrow i+1 \\ \qquad x \leftarrow x + 16 \\ \quad y \leftarrow y + 1 \\ PICTDECOD \end{array}$$

$x := 0 .. XMAX - 1$  $y := 0 .. YMAX - 1$  $PICTORG_{y,x} := PICTIN_{y,x}$

## Fig.15

Dynamic range

Sample group

**Fig.16**

II

I0

0I

00

Sample group

**Fig.17**

**Fig.18**

Group 1

Highest group 1 value
Q0...Q15
Lowest group 1 value

Group 2

Highest group 2 value
Q16...Q31
Lowest group 2 value

Group 3

Highest group 3 value
Q32...Q37
Lowest group 3 value

**Fig.19**

Group 1

Highest group 1 value
Q0...Q15
Null
Lowest group 1 value

Group 2

Highest group 2 value
Q16...Q31
Lowest group 2 value

Group 3

Highest group 3 value
Q32...Q47
Lowest group 3 value

**EP 1 667 467 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0926898 A